Europäisches Patentamt

European Patent Office

Office européen des brevets

(11) Publication number: **0 382 876 B1**

(12) **EUROPEAN PATENT SPECIFICATION**

(45) Date of publication of patent specification: **08.06.94** (51) Int. Cl.5: **C02F 1/66, A23L 1/304**

(21) Application number: **89102771.6**

(22) Date of filing: **17.02.89**

(54) Process for separating salts contained in seawater.

(43) Date of publication of application:
**22.08.90 Bulletin 90/34**

(45) Publication of the grant of the patent:
**08.06.94 Bulletin 94/23**

(84) Designated Contracting States:
**BE DE ES FR GB GR IT NL SE**

(56) References cited:
**FR-A- 2 082 097**
**GB-A- 1 486 366**

**CHEMICAL ABSTRACTS, vol. 92, no. 3, 21st January 1980, page 553, abstract no.20914d, Columbus, Ohio, US; & JP-A-79 110 368 (M. OKUYAMA) 29-08-1979**

(73) Proprietor: **Nasu, Hisamoto**
**99 Katako, Youkaichiba-shi**
**Chiba-ken(JP)**

(72) Inventor: **Nasu, Atsushi**
**deceased**
**(JP)**

(74) Representative: **Popp, Eugen, Dr. et al**
**MEISSNER, BOLTE & PARTNER**
**Widenmayerstrasse 48**
**D-80538 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

BACKGROUND OF THE INVENTION

1. Field of the invention

The present invention relates to a process for separating and recovering salts contained in seawater and to the use of the seawater solutions, from which precipitates have been removed by the process, as well as to the use of the precipitates which have been removed from the seawater by such a process.

2. Related Art Statement

It is well known that there are many chemical elements such as Na, Cl, various metals and halogens in seawater. But only a few elements such as Na, Cl, Mg, Br were removed from seawater as mineral source heretofore.

Raw salts are obtained from seawater by vaporization and used for many purposes. However, excessive energy is necessary in the vaporization because it requires a phase-change of water. Furthermore, the raw salts have to be purified or prepared for the respective purpose. In addition to vaporization, reverse osmosis is carried out for desalinization of seawater. The reverse osmosis is carried out by using a large scale and expensive apparatus such as a high-pressure pump or reverse osmosis modules. Moreover, these processes of desalinization of seawater do not aim at utilizing the available elements from seawater, rather they only intend to desalt seawater.

A typical conventional process of this kind is known from GB-A-1 486 366 wherein the treatment of the seawater to be desalted is carried out by evaporation. For that purpose, a process for desalting seawater by passing hot seawater through an evaporation zone is disclosed, comprising the steps of evaporating vapour in the zone from the hot solution, condensing the vapour on an indirect heat-exchange service and recovering the resulting distillate, recovering a portion of the brine not evaporated for recycle, admixing the portion of brine with replenishment seawater, supplying the resulting mixture as cooling fluid for the heat-exchange surface, thereby pre-heating the mixture, and further heating the pre-heated mixture in a head heater before passing the resulting seawater into the evaporation zone. So, this conventional process requires a lot of energy taking into account the fact that huge amounts of seawater are to be treated when it is intended to obtain the desired amounts of fresh water.

SUMMARY OF THE INVENTION

The object underlying the present invention is to provide a simple process for collecting a particular selection of available elements from seawater and a precipitate. In other words, it is intended to obtain salts in a relatively short time and without any special and complicated apparatus in order to obtain suitable salts or groups of salts with different properties out of the seawater under processing. Another object underlying the present invention is to provide a process in order to obtain a solution containing other available elements of seawater and to be utilized for desalinization of seawater.

According to a first aspect of the present invention, a process for separating and recovering salts contained in seawater is disclosed, comprising the following steps: adjusting the pH-value of seawater to a low pH-value of 2 or less by adding a strong acid having sulphate ions and/or phosphate ions; adding a strong alkaline agent thereto in an amount sufficient to provide a high pH-value of 13 or more so that a precipitate of metal salts is formed; and removing the precipitate deposited thereby from the seawater.

According to a second aspect according to the invention, a process for separating and recovering salts contained in seawater is disclosed, comprising a first separation step and a second separation step, wherein the first separation step comprises:

a) adjusting the pH-value of seawater to a low pH-value of 2 or less by adding a strong acid having sulphate ions and/or phosphate ions,

b) adding a strong alkaline agent thereto in an amount sufficient to provide a high pH-value of 13 or more thereby forming a first precipitate of salts, and

c) removing the first precipitate deposited thereby from the seawater, and collecting the remaining first solution,

wherein the second separation step comprises:

d) concentrating the first solution;

e) cooling the concentrated solution to form a second precipitate of salts, and

2

f) removing the second precipitate deposited thereby and collecting the remaining second solution.

According to a further development of the processes according to the invention, the strong alkaline agent is NaOH.

According to another further development of the processes according to the invention, the strong alkaline agent is an aqueous solution of calcium oxide and/or sodium hydroxide.

According to a further development of the process according to the second aspect of the invention, the remaining solution of the seawater is concentrated to 10 % to 30 % by volume.

According to a still further development of the process according to the second aspect of the invention, the remaining solution of the seawter is concentrated to 15 % by volume.

A further aspect of the present invention is the use of the seawater solutions, from which the respective precipitates have been removed by the process according to the invention, as a combustion aid, for neutralization of acidic waste oils or as a solvent for paints.

A still further aspect of the invention is the use of the precipitates, which have been removed from the seawater by the process according to the invention, as food additives or as a source of chemical elements, in particular Mg, Ca, K, Na, Al, B, Fe, Zn and Si.

In the following, the invention will be explained in more detail with reference to the description of preferred embodiments.

## DETAILED DESCRIPTION OF PREFERRED EMBODIMENTS

First, a strong acid containing sulphate ions is added to seawater to obtain a low pH-value. Here several percent of diluted sulfuric acid can be used as the strong acid containg sulphate ions. An acidic solution obtained by addition of 4 - 5 % of sulfuric acid to an aqueous solution of activated calcium phosphate and removing a precipitate therefrom (P-S acid) is preferably used. The P-S acid is a strong acid having a pH-value of about 0,2, but this acid is very calm or mild to human skin and treated easily in contrast with sulfuric acid. In the course of 2 - 3 hours after adding the diluted sulfuric acid or the P-S acid to seawater, the pH-value of the seawater is adjusted to a low pH-value of not more than 2. A precipitate, of which only a very small amount has been deposited, is removed by filtration together with other suspended materials in seawater.

Next, a strong alkaline agent is added to the pH-adjusted seawater to neutralize and to adjust its pH-value to a high pH-value. By adding a strong alkaline agent to the seawater, salts such as sulphates of alkali earth metals and other metals, the solubility of which decreases at a high pH-value precipitate. Sodium hydroxide (solid) or an aqueous solution of calcium oxide and sodium hydroxide (Ca-Na solution) or the like is used as the strong alkaline agent. The strong alkaline agent is used in an amount sufficient to provide a pH-value of 13 or more. Usually sodium hydroxide (solid) is used about 3 % of seawater and Ca-Na solution is used about 5 % of seawater. In the course of several hours after adding the alkaline, seawater reaches a pH-value 13 or above and a precipitate (a) is deposited.

The precipitate (a) contains Ca, K, Mg and a significant amount of Al, B, Fe, Zn, etc. according to an elemental analysis on wetty condition. As shown in Table 1, Mg, Al, B, Fe, Zn have increased significantly by this separation compared to the amounts of these elements in natural seawater.

Accordingly, the precipitate (a) can be utilized as a source of these metals and also may have many purposes as an alkaline agent including many available metal ions.

On the other hand, after removing the precipitate (a), the seawater contains mainly Cl ions as anions and a significant amount of Si and Li. This remaining seawater can be utilized as a source of such chemical elements and can also be used for a combustion aid utilizing seawater.

Moreover, in the second step the remaining seawater is separated into a precipitate and a residue of solution by concentrating the remaining seawater and cooling it.

In this separation step, the remaining seawater is concentrated to 10 to 30 % by volume and then cooled. By cooling, a white crystalline precipitate (b) starts to separate immediately.

The salts of the precipitate (b) contain as main components Na, K and Si. The salts of the precipitate (b) can be utilized as a source of Si, and an aqueous solution of the salts is utilized for food additives or other purpose. The food additives are applied to noodles or drinks and improve the taste of foods and give antibacterial activity to the foods.

The residue of the remaining seawater after removing the salts of the precipitate (b) contains Na, K as main components and Ca, Si and Li as minor components. The remaining seawater after removing the salts of the precipitate (b) has a high pH-value (more than 14) and can be used for any purpose as an alkaline agent. For example, it is used for neutralization of acidic waste oils or as a solvent for paints.

EXAMPLE

1. Preparation of P-S acid

An aqueous solution (1) having a pH-value of more than 13 was obtained by adding 50 g of a strongly alkaline agent to 1 liter of water. The strong alkaline agent used herein was a powdery agent containing mainly calcium phosphate obtained by baking bones. P-S acid having a pH-value of 0,2 was obtained by adding 5 % of diluted sulfuric acid to the solution (1).

2. Preparation of Ca-Na solution

An aqueous solution (2) having a pH-value of more than 13 was obtained by adding 30 g of a powdery alkaline agent to 1 liter of seawater. The powdery alkaline agent used herein was a powdery agent containing mainly calcium oxide obtained by firing limestones. Another aqueous solution (3) having a pH-value of more than 13 was obtained by adding 30 g of the same powdery alkaline agent to 1 liter of water. Ca-Na solution was prepared by dissolving 5 % of NaOH (solid) in the mixture of the solution (2) and the solution (3) in a ratio of 1:1 by volume.

3. Separation of salts from seawater (First step)

3 hours after adding 10 liter of aforementioned P-S acid to 500 liter of seawater, insoluble materials were removed by filtration. By this treatment, the pH-value of seawater became 1,6. Next, 25 liter of Ca-Na solution were added to 500 liter of the seawater of low pH-value. After standing for 10 hours, the precipitate deposited thereby was separated by filtration and sun-dried. Then about 30 g of solid salts of the precipitate (a) were obtained. The remaining seawater had a pH-value of 9,1. The results of an elemental-analysis of the solid salts of the precipitate (a) and the remaining seawater are listed in Tables 1 and 2 given below.

It is evident from the results that elements such as Mg, Al, Cu, Fe, Zn etc. could be collected in the precipitate (a) from seawater.

4. Separation of salts from the remaining seawater (Second step)

10 liter of the remaining seawater obtained in the first step were concentrated to about 15 % by heating.

The concentrated seawater was cooled in a water bath. Then crystalline salts started to deposit immediately. These salts of the precipitate (b) were separated by filtration.

The dry weight of the salts of the precipitate (b) was 200 g. The results of an elemental-analysis of the salts of the precipitate (b) and the filtrated seawater are listed in the Tables 3 and 4 given below. As shown in Tables 3 and 4, the salts are Si-rich salts and the residue contains few cations besides Na, K and Ca.

5. Example of utilization

The remaining seawater after removing the precipitate (a) in the first separation step was used for producing combustion aids which the applicant developed. Such a combustion aid was obtained by adding a strong alkaline agent containing mainly calcium oxide to the aforementioned seawater, dissolving therein a mixture of oils, a strongly alkaline agent containing mainly calcium oxide and a little amount of water and removing insoluble materials therefrom. The combustion aid thus obtained was effective for reducing fuel costs and cleaning the exhaust gas when sprayed into internal combustion engines.

Further, clogging of the supplying system of fuels was reduced excellently when this combustion aid was used compared with combustion aids prepared by using untreated seawater.

4

Table 1

| Elements | Precipitate (mg/l) | Seawater (mg/l) |
|---|---|---|
| Ca | 590 | 401 |
| K | 390 | 380 |
| Mg | 4320 | 1300 |
| Na | 12200 | 10500 |
| S | 1310 | 900 |
| Al | 327 | 0,01 |
| B | 13,9 | 4,8 |
| Cr | 0,08 | 0,00005 |
| Cu | 0,02 | 0,0006 |
| Fe | 2,07 | 0,01 |
| Mn | 0,07 | 0,002 |
| Si | 6,4 | 3 |
| Sr | 4,7 | 8 |
| Zn | 13,7 | 0,001 |

Table 2

| Remaining Seawater | | Seawater (natural) |
|---|---|---|
| $Cl^-$ (mg/l) | 17200 | 18980 |
| $K^+$ (mg/l) | 350 | 380 |
| $Na^+$ (g/l) | 11,5 | 10,556 |
| $Ca^{2+}$ (mg/l) | 300 | 401 |
| $Mg^{2+}$ (mg/l) | 250 | 1272 |

5

Table 3

Elements in salts obtained in the second step

(mg/kg)

| Ca | 2030 | Al | 33,5 | Mn | 1,39 |
|----|------|----|------|----|------|
| K | 4770 | B | 169 | Si | 697 |
| Mg | 6,10 (%) | Cr | 2,78 | Sr | 194 |
| Na | 33,7 (%) | Cu | 5,66 | Zn | 2,09 |
| S | 3,81 (%) | Fe | 17,8 | Li | 8,93 |

Table 4

Elements in filtrate obtained in the second step

(mg/kg)

| Ca | 13,2 | Al | ------ | Mn | ------ |
|----|------|----|--------|----|--------|
| K | 3840 | B | ------ | Si | 2,32 |
| Mg | Trace | Cr | ------ | Sr | 0,04 |
| Na | 14,8 (%) | Cu | ------ | Zn | ------ |
| S | 7560 | Fe | ------ | Li | 2,92 |

**Claims**

1. A process for separating and recovering salts contained in seawater, comprising
   - adjusting the pH-value of seawater to a low pH-value of 2 or less by adding a strong acid having sulphate ions and/or phosphate ions,
   - adding a strong alkaline agent thereto in an amount sufficient to provide a high pH-value of 13 or more so that a precipitate of metal salts is formed, and
   - removing the precipitate deposited thereby from the seawater.

**2.** A process for separating and recovering salts contained in seawater, comprising a first separation step and a second separation step,

the first separation step comprising:

a) adjusting the pH-value of seawater to a low pH-value of 2 or less by adding a strong acid having sulphate ions and/or phosphate ions,

b) adding a strong alkaline agent thereto in an amount sufficient to provide a high pH-value of 13 or more thereby forming a first precipitate of salts, and

c) removing the first precipitate deposited thereby from the seawater, and collecting the remaining first solution,

the second separation step comprising:

d) concentrating the first solution,

e) cooling the concentrated solution to form a second precipitate of salts, and

f) removing the second precipitate deposited thereby and collecting the remaining second solution.

**3.** The process in accordance with claim 1 or 2,
wherein the strong alkaline agent is NaOH.

**4.** The process in accordance with claim 1 or 2,
wherein the strong alkaline agent is an aqueous solution of calcium oxide and/or sodium hydroxide.

**5.** The process in accordance with 'any of claims 2 to 4,
wherein the remaining solution of the seawater is concentrated to 10 % to 30 % by volume.

**6.** The process in accordance with any of claims 2 to 5,
wherein the remaining solution of the seawater is concentrated to 15 % by volume.

**7.** Use of the seawater solutions, from which the respective precipitates have been removed by the process according to any of claims 1 to 6, as a combustion aid, for neutralization of acidic waste oils or as a solvent for paints.

**8.** Use of the precipitates, which have been removed from the seawater by the process according to any of claims 1 to 6, as food additives or as a source of chemical elements, in particular Mg, Ca, K, Na, Al, B, Fe, Zn and Si.

**Patentansprüche**

**1.** Verfahren zum Abscheiden und Wiedergewinnen von Salzen, die in Seewasser enthalten sind, umfassend die folgenden Schritte:
- Einstellen des pH-Wertes von Seewasser auf einen niedrigen pH-Wert von 2 oder weniger durch Hinzufügen einer starken Säure, die Sulfationen und/oder Phosphationen enthält,
- Hinzugeben eines starken alkalischen Mittels in einer ausreichenden Menge, um einen hohen pH-Wert von 13 oder mehr zu erhalten, so daß ein Niederschlag von Metallsalzen gebildet wird, und
- Entfernen des dadurch ausgefällten Niederschlages aus dem Seewasser.

**2.** Verfahren zum Abscheiden und Wiedergewinnen von Salzen, die in Seewasser enthalten sind, umfassend einen ersten Abscheidungsschritt und einen zweiten Abscheidungsschritt,
wobei der erste Abscheidungsschritt folgendes umfaßt:

a) Einstellen des pH-Wertes von Seewasser auf einen niedrigen pH-Wert von 2 oder weniger durch Hinzufügen einer starken Säure, die Sulfationen und/oder Phosphationen enthält,

b) Hinzufügen eines starken alkalischen Mittels in einer ausreichenden Menge, um einen hohen pH-Wert von 13 oder mehr zu erhalten, um dadurch einen ersten Niederschlag von Salzen zu bilden, und

c) Entfernen des dadurch ausgefällten ersten Niederschlages aus dem Seewasser, und Sammeln der verbleibenden ersten Lösung,

wobei der zweite Abscheidungsschritt folgendes umfaßt:

d) Konzentrieren der ersten Lösung,

e) Kühlen der konzentrierten Lösung, um einen zweiten Niederschlag von Salzen zu bilden, und

f) Entfernen des dadurch ausgefällten zweiten Niederschlags und Sammeln der verbleibenden zweiten Lösung.

**3.** Verfahren nach Anspruch 1 oder 2,
wobei das starke alkalische Mittel NaOH ist.

**4.** Verfahren nach Anspruch 1 oder 2,
wobei das starke alkalische Mittel eine wässrige Lösung von Kalziumoxid und/oder Natriumoxid ist.

**5.** Verfahren nach einem der Ansprüche 2 bis 4,
wobei die verbleibende Lösung des Seewassers auf 10 Vol.-% bis 30 Vol.-% konzentriert wird.

**6.** Verfahren nach einem der Ansprüche 2 bis 5,
wobei die verbleibende Lösung des Seewassers auf 15 Vol.-% konzentriert wird.

**7.** Verwendung der Seewasserlösungen, aus denen die jeweiligen Niederschläge mit dem Verfahren nach einem der Ansprüche 1 bis 6 entfernt worden sind, als Verbrennungs-Hilfsstoff, zur Neutralisierung von sauren Abfallölen oder als Lösungsmittel für Farben.

**8.** Verwendung der Niederschläge, die aus dem Seewasser mit dem Verfahren gemäß einem der Ansprüche 1 bis 6 entfernt worden sind, als Nahrungsmittelzusätze oder als Ausgangsmaterial für chemische Elemente, insbesondere Mg, Ca, K, Na, Al, B, Fe, Zn und Si.

**Revendications**

**1.** Procédé pour séparer et pour récupérer des sels contenus dans l'eau de mer, comprenant les étapes consistant à :
- ajuster la valeur de pH de l'eau de mer à une valeur de pH faible de 2 ou moins en ajoutant un acide fort possédant des ions sulfates et/ou des ions phosphates,
- y ajouter un agent alcalin fort dans une quantité suffisante pour assurer une valeur de pH élevée de 13 ou plus de sorte qu'il se forme un précipité de sels métalliques, et
- enlever le précipité- qui se dépose de ce fait hors de l'eau de mer.

**2.** Procédé pour séparer et récupérer les sels contenus dans l'eau de mer, comprenant une première étape de séparation et une seconde étape de séparation,
la première étape de séparation comprenant :
a) on ajuste la valeur de pH de l'eau de mer à une valeur de pH faible de 2 ou moins en ajoutant un acide fort possédant des ions sulfates et/ou des ions phosphates,
b) on y ajoute un agent alcalin fort dans une quantité suffisante pour assurer une valeur de pH élevée de 13 ou plus en formant de ce fait un premier précipité de sels, et
c) on enlève le premier précipité qui se dépose de ce fait hors de l'eau de mer, et on recueille la première solution restante,
la seconde étape de séparation comprenant :
d) on concentre la première solution,
e) on refroidit la solution concentrée afin de former un second précipité de sels, et
f) on enlève le second précipité déposé de ce fait et on recueille la seconde solution restante.

**3.** Procédé selon l'une ou l'autre des revendications 1 et 2, dans lequel l'agent alcalin fort est du NaOH.

**4.** Procédé selon l'une ou l'autre des revendications 1 et 2, dans lequel l'agent alcalin fort et une solution aqueuse d'oxyde de calcium et/ou d'hydroxyde de sodium.

**5.** Procédé selon l'une quelconque des revendications 2 à 4, dans lequel la solution restante d'eau de mer est concentrée jusqu'à 10 à 30% en volume.

**6.** Procédé selon l'une quelconque des revendications 2 à 5, dans lequel la solution restante d'eau de mer est concentrée jusqu'à 15% en volume.

7. Utilisation des solutions d'eau de mer, hors desquelles on a enlevé les précipités respectifs par le procédé selon l'une quelconque des revendications 1 à 6, en tant qu'aides de comoustion, pour la neutralisation d'huiles de rebut acides, ou en tant que solvants pour des peintures.

8. Utilisation des précipités, qui ont été enlevés de l'eau de mer par le procédé selon l'une quelconque des revendications 1 à 6, en tant qu'additifs alimentaires, ou en tant que sources d'éléments chimiques, en particulier Mg, Ca, K, Na, Al, B, Fe, Zn et Si.